(19) Europäisches Patentamt
European Patent Office
Office européen des brevets

(11) EP 4 772 574 A1

(12) EUROPEAN PATENT APPLICATION

(43) Date of publication:
08.07.2026 Bulletin 2026/28

(21) Application number: 25150279.5

(22) Date of filing: 06.01.2025

(51) International Patent Classification (IPC):
*C08L 23/10* (2006.01)

(52) Cooperative Patent Classification (CPC):
(C-Sets available)
**C08L 23/10;** C08L 2205/025; C08L 2207/20
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Basell Poliolefine Italia S.r.l.**
**20121 Milano (IT)**

(72) Inventors:
- **TARTARI, Davide**
  **44122 Ferrara (IT)**
- **CAVALIERI, Claudio**
  **44122 Ferrara (IT)**
- **COVA, Cristina**
  **44122 Ferrara (IT)**
- **GRAZZI, Michele**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

# (54) COMPOSITIONS OBTAINED FROM RECYCLATE POLYOLEFINS

(57) The present disclosure relates to a polyolefin composition comprising:
A) from 99.5% to 60% by weight of a recyclate polyolefin component containing not less than 80% by weight of a waste material selected from polyethylene, polypropylene or their mixtures;
B) from 0.5% to 40% by weight of an ethylene copolymer having:
1) a 1-butene from 15% to 45% by weight;
2) density from 0.840 to 0.910 g/cm$^3$;
3) Melt Flow Rate E from 0.1 to 15 g/10 min., preferably from 0.3 to 12 g/10 min., measured according to ISO 1133-1 2012-03 at 190 °C, with a load of 2.16 kg;
4) product r1·r2 of the reactivity ratios obtained from $^{13}$C NMR triad distribution, from 0.55 to 0.95, where r1 is the reactivity ratio of ethylene to 1-butene and r2 is the reactivity ratio of 1-butene to ethylene.



Processed by Luminess, 75001 PARIS (FR)

(Cont. next page)

(52) Cooperative Patent Classification (CPC): (Cont.)

C-Sets
**C08L 23/10, C08L 23/04, C08L 23/0815**

## Description

FIELD OF THE INVENTION

The present disclosure relates to polyolefin compositions comprising recyclate polyolefins and a low density ethylene copolymer.

BACKGROUND OF THE INVENTION

Polyolefins, in particular polyethylene and polypropylene, are increasingly consumed in large amounts for many applications, including packaging for food and other goods, fibers, automotive components, and a great variety of manufactured articles. However the said massive use of polyolefins is creating large volumes of waste materials.
Increasing amounts of said waste materials are presently collected in form of recyclates.
The term "recyclate" is currently used in the plastic industry to designate secondary raw materials that have been obtained through the recovery of waste and are suitable for the manufacture of products.
Plastic recyclates, including polyolefin recyclates, are basically divided into two categories:

- recyclates from end-user waste, called Post Consumer Recyclate (PCR); or
- recyclates from industrial waste, called Post Industrial Recyclate (PIR).

With regard to polyolefin recyclates, the recycling market offers a big variety of PCR and PIR, in terms of composition and quality. Most of these are polyolefin mixtures mainly coming from streams of flexible packaging.
An important recycling route for said recyclate materials is represented by the so called "mechanical recycling", which can be defined as a material reprocessing into plastic items after a reworking step, generally carried out by regrinding or repelletising.
However, a serious obstacle playing against the growth of mechanical recycling of polyolefins is represented by the low quality, in terms of processabilty and in particular of mechanical properties, of the reworked material, strongly limiting the potential value of recycled polyolefins in many important applications, like sheets, laminates and geomembranes.
Hence, one of the big challenges and an hopefully an alternative to the downcycling of said recyclates is of enabling to enhance the performances of the mixtures, to find some outlets in important markets.
Thus, to improve the mechanical properties of the said materials, it has been proposed to add relatively large amounts of fillers and/or compatibilizing/coupling agents, including plastomers and elastomers, as described for instance in US patent 5030662, WO2020089196A1 and WO2022023469A1.
It has now been found that the mechanical properties of recyclate polyolefin materials, in particular the elongation at break and the impact resistance, are remarkably improved by adding specific kinds of low density ethylene copolymers.

SUMMARY OF THE INVENTION

Thus the present disclosure provides a polyolefin composition comprising:

A) from 99.5% to 60% by weight, preferably from 99% to 65% by weight, more preferably from 99% to 70% by weight, of a recyclate polyolefin component containing not less than 80% by weight, preferably not less than 90% by weight, more preferably not less than 95% by weight, with respect to the weight of A), of a waste material selected from polyethylene, polypropylene or their mixtures;
B) from 0.5% to 40% by weight, preferably from 1% to 35% by weight, more preferably from 1% to 30% by weight, of an ethylene copolymer having the following features:

1) a 1-butene content $C4_{cont}$, measured with $^{13}C$ NMR, from 15% to 45% by weight, preferably from 20% to 40% by weight, with respect to the weight of the ethylene copolymer;

2) density from 0.840 to 0.910 g/cm$^3$, preferably from 0.850 to 0.890 g/cm$^3$, more preferably from 0850 to 0.880 g/cm$^3$, determined according to ISO 1183-1:2012 at 23°C;

3) Melt Flow Rate E from 0.1 to 15 g/10 min., preferably from 0.3 to 12 g/10 min., measured according to ISO 1133-1 2012-03 at 190 °C, with a load of 2.16 kg;

4) product $r1 \cdot r2$ of the reactivity ratios obtained from $^{13}C$ NMR triad distribution, from 0.55 to 0.95 or from 0.55 to

0.92, preferably from 0.6 to 0.95 or from 0.6 to 0.92, more preferably from 0.55 to 0.89 or from 0.6 to 0.92, where r1 is the reactivity ratio of ethylene to 1-butene and r2 is the reactivity ratio of 1-butene to ethylene;

wherein the amounts of A) and B) are referred to the total weight of A) + B).

DETAILED DESCRIPTION OF THE INVENTION

The expression "recyclate polyolefin" as used herein for component A), means the previously said Post Consumer Recyclate ("PCR") polyolefin and/or Post Consumer Recyclate ("PIR") polyolefin. As previously mentioned, the PCR polyolefin is derived from an end product that has completed its life cycle as a consumer item and would otherwise be disposed of as waste.

Said PCR polyolefin includes polyolefin materials that have been collected in commercial and residential recycling programs, including flexible packaging (cast film, blown film and BOPP film), rigid packaging, blow molded bottles and injection molded containers.

The PIR polyolefin is derived from plastic scrap that is generated as waste from an industrial process.

Usually, through a step of separation from other polymers possibly present, recyclate polyolefins A) of different types are obtained, containing two main polyolefinic fractions, namely polyethylenes and polypropylenes.

Actually, both the polypropylene and polyethylene materials can be present in the same recyclate polyolefin component A) in significant amounts, so it is proper to say that the said recyclate polyolefin component A) is "polyethylene-rich" or "polypropylene-rich", depending on the prevailing fraction.

Preferred relative amounts of waste polyethylene and waste polypropylene in the recyclate polyolefin component A) are:

- from 5% by weight to 95% by weight of polyethylene and from 95% by weight to 5% by weight of polypropylene; or
- from 10% by weight to 90% by weight of polyethylene and from 90% by weight to 10% by weight of polypropylene; or
- from 15% by weight to 85% by weight of polyethylene and from 85% by weight to 15% by weight of polypropylene; or
- from 20% by weight to 80% by weight of polyethylene and from 80% by weight to 20% by weight of polypropylene; or
- from 25% by weight to 75% by weight of polyethylene and from 75% by weight to 25% by weight of polypropylene;

all said amounts being referred to the total weight of waste polyethylene and waste polypropylene.

All kinds of polyethylene (ethylene homopolymers or copolymers) or polypropylene (propylene homopolymers or copolymers) can be present in the recyclate polyolefin component A). In particular, the polyethylene fraction can comprise one or more polymer materials selected from HDPE (High Density Polyethylene, typically having a density from 0.935 to 0.970 g/cm$^3$, in particular from 0.935 to 0.965 g/cm$^3$), MDPE and LLDPE (Medium Density and Linear Low Density Polyethylene, typically having a density from 0.915 to 0.934 g/cm$^3$), VLDPE (Very Low Density Polyethylene, typically having a density from 0.900 to 0.914 g/cm$^3$), and LDPE (Low Density Polyethylene, typically having a density 0.914 to 0.935 g/cm$^3$).

While the HDPE and LDPE can be either homopolymers or copolymers of ethylene, MDPE, LLDPE and VLDPE are copolymers.

In MDPE, LLDPE and VLDPE copolymers, the comonomers are generally selected from propylene and higher alpha-olefins, in particular C4-C10 alpha-olefins having the general formula $CH_2$=CHR wherein R is an alkyl radical, linear or branched, or an aryl radical, having from 2 to 8 carbon atoms.

Specific examples of C4-C10 alpha-olefins are butene-1, pentene-1, 4-methylpentene-1, hexene-1 and octene-1.

Examples of LDPE copolymers include ethylene-vinyl acetate copolymers, ethylene-vinyl alcohol copolymers, ethylene-acrylate copolymers, ethylene-methacrylate copolymers and ethylene-alpha-olefin copolymers, where preferred examples of alpha-olefins are propylene and the above reported C4-C10 alpha-olefins.

The amount of comonomers in the ethylene copolymers may be from 1 to 40% by weight, in particular from 2 to 35% by weight, referred to the weight of the concerned copolymer.

The polypropylene fraction can comprise one or more polymer materials selected from homopolymers, copolymers and heterophasic copolymers. In particular it can comprise one or more propylene polymer materials selected from the following:

I) isotactic or mainly isotactic propylene homopolymers;

II) random copolymers of propylene with ethylene and/or C4-C10 alpha-olefins, wherein the total comonomer content ranges from 0.05% to 20% by weight, or mixtures of said copolymers with isotactic or mainly isotactic propylene homopolymers;

III) heterophasic copolymers comprising a propylene homopolymer and/or one of the copolymers of item II), and an elastomeric fraction comprising copolymers of ethylene with propylene and/or a C4-C10 alpha-olefin, optionally containing minor amounts of a diene, such as butadiene, 1,4-hexadiene, 1,5-hexadiene, ethylidene-1-norbomene.

Preferred examples of C4-C10 alpha-olefins are the same as reported above.

The said HDPE, MDPE, LLDPE, VLDPE and propylene polymers described herein are well known in the art and are prepared with low pressure polymerization in the presence of a Ziegler-Natta, or a single site, or a chromium polymerization catalyst.

The said LDPE is well known in the art as well and is prepared with high pressure polymerization in the presence of a radical initiator, like an organic peroxide or oxygen.

Other polymeric materials that can be present as impurities in the recyclate polyolefin component A) are polystyrene, ethylene vinyl acetate copolymers, polyethylene terephthalate.

Other impurities that can be present in the recyclate polyolefin component A) are metals (in particular Al), fillers and pigments.

Preferably, the recyclate polyolefin component A) has at least one of the following features:

- elongation at break equal to or lower than 600%, more preferably equal to or lower than 400%, most preferably equal to or lower than 250%, the lower limit being preferably of 5%, more preferably of 15% in all cases;
- Melt Flow Rate E from 0.1 to 40 g/10 min., more preferably from 0.3 to 25 g/10 min.;
- density from 0.91 to 0.93 g/$cm^3$ ;
- a first peak melting temperature Tm(1) ranging from 105° to 115°C and a second peak melting temperature Tm(2) ranging from 118° to 128°C;
- tensile modulus from 500 to 1300 MPa, more preferably from 600 to 1200 MPa;
- elongation at break from 10% to 200%, more preferably from 15% to 180%;
- Impact Charpy notched at 23 °C from 3 to 30 kJ/$m^2$, more preferably from 4 to 25 kJ/$m^2$;
- an ash content (ISO 3451-1 at 800°C) equal to or lower than 4.0% by weight, most preferably ranging from 0.2 to 1.0% by weight, based on the weight of the recyclate polyolefin component A).

Recyclate polyolefin materials suited for use as recyclate polyolefin component A) are commercially available.

Specific examples of commercial products suited for use as recyclate polyolefin component A) are *CirculenRecover* PP300P Grey and *CirculenRecover* HD5603 Grey Plus, sold by LyondellBasell Industries. Each of them can be used as recyclate polyolefin component A) or they can be used in admixture with each other and/or with other recyclate polyolefin materials, to obtain different kinds of recyclate polyolefin component A).

In general, the term "copolymer" is meant to include also polymers containing more than one kind of comonomers, such as terpolymers.

In the ethylene copolymer component B) the additional comonomers are preferably selected from propylene and olefins having formula $CH_2$=CHR wherein R is an alkyl radical, linear or branched, having from 3 to 10 carbon atoms.

Specific examples of said olefins, other than propylene, are pentene-1, 4-methylpentene-1, hexene-1, octene-1 and decene-1.

Moreover, the present ethylene copolymer component B) can have at least one of the following additional features:

- elongation at break equal to or greater than 920%, preferably equal to or greater than 950%, the upper limit being preferably of 1800%, more preferably of 1600% in all cases;
- melting temperature Tm from 1 °C to 55 °C, preferably from 8 °C to 50 °C, measured by Differential Scanning Calorimetry with a heating rate of 10°C per minute;
- a ratio $C4_{cont}$ / ΔHm from 0.1 to 2.5, preferably from 0.2 to 2.0;
- melting enthalpy ΔHm equal to or lower than 60 J/g, preferably equal to or lower than 55 J/g, in particular from 5 to 60 J/g, or from 10 to 55 J/g, measured by Differential Scanning Calorimetry with a heating rate of 10°C per minute;
- crystallization temperature Tc equal to or higher than 8 °C, preferably equal to or higher than 10 °C, measured by Differential Scanning Calorimetry with a heating rate of 10°C per minute, the preferred upper limit being of 55°C, more preferably of 50 °C;
- glass transition temperature (Tg), measured by Differential Scanning Calorimetry with a heating rate of 10°C per minute, from -35 to -60°C;
- Shore A from 20 to 75;
- an amount of total fraction $XS_{TOT}$ soluble in xylene at 25°C, with respect to the total weight of the ethylene copolymer, of 90 - 100% by weight, preferably of 95 - 100% by weight;
- an intrinsic viscosity [η], measured in tetrahydronaphthalene at 135 °C, of 0.8 dl/g or more, in particular from 0.8 to 2.9

dl/g, more preferably from 0.9 to 2.0.

Preferably, the present ethylene copolymer component B) may have at least one of the following properties:

- a 1-butene content $C4_{cont}$ from 24% to 45% by weight, preferably from 26% to 40% by weight, with respect to the weight of the ethylene copolymer;
- Melt Flow Rate E from 0.8 to 15 g/10 min., preferably from 1.0 to 12 g/10 min.;
- product r1·r2 from 0.75 to 0.95, preferably from 0.77 to 0.92;
- amount of BBB triads of at least 0.1%, preferably of at least 0.3%, the preferred upper limit being in all cases of 2.5%, in particular of 2%.

The above reported preferred Melt Flow Rate E values allow an easier processing of the ethylene copolymer in the molten state.

Preferably, the present ethylene copolymer component B) may have a molecular weight distribution (Mw/Mn) lower than 4, preferably lower than 3; more preferably lower than 2.5, the lower limit being of 1.5 in all cases.

Optionally, the present ethylene copolymer component B) may have at least one of the further following additional features:

- strength at break from 1 to 15 MPa;
- stress at 100% elongation from 0.5 to 5 MPa;
- stress at 300% elongation from 0.5 to 5 MPa;
- tension set at 100% elongation, 23 °C from 4% to 15%;
- compression set at 25%, 23 °C from 15% to 50%.

The present ethylene copolymer component B) can be obtained by polymerizing the monomers in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

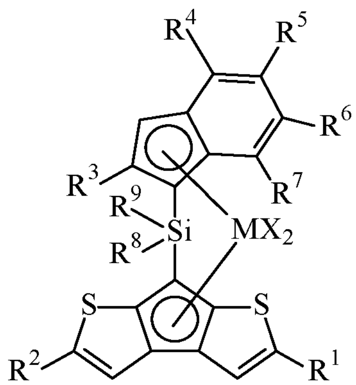

wherein:

M is an atom of a transition metal selected from those belonging to group 4; preferably M is zirconium;

X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to groups 13-17 of the Periodic Table of the Elements; and R' is a $C_1$-$C_{20}$-alkylidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;

$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to groups 13-17 of the Periodic Table of the Elements; or $R^5$ and $R^6$,

and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to groups 13-17 of the Periodic Table of the Elements; preferably a $C_1$-$C_{10}$-alkyl radical;

$R^3$ and $R^4$, equal to or different from each other, are linear or branched, saturated or unsaturated $C_1$-$C_{20}$-alkyl radicals, optionally containing heteroatoms belonging to groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have formula (Ia):

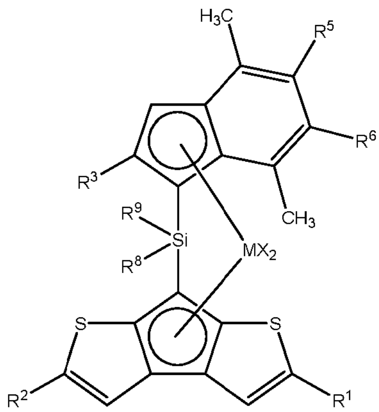

(Ia)

wherein:

M, X, $R^1$, $R^2$, $R^5$, $R^6$, $R^8$ and $R^9$ have been described above;

$R^3$ is a linear or branched, saturated or unsaturated $C_1$-$C_{20}$-alkyl radical, optionally containing heteroatoms belonging to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilyl{(2,4,7-trimethyl-1-indenyl)-7-(2,5-dimethyl-cyclopenta[1,2-b:4,3-b']-dithiophene)} zirconium dichloride; dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl {(1-(2,4,7 -trimethylindenyl)-7 -(2,5-dimethyl-cyclopenta[1,2-b:4,3-b']-dithiophene)}zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkyl metallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples organo aluminum compound are trimethylaluminum (TMA), triisobutylaluminium (TIBA), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Preferred Al/metallocene molar ratios are from 500 to 10000.

Hence the ethylene copolymer component B) can be prepared operating under known polymerization conditions in the presence of the above described catalysts.

One of the methods for preparing the present ethylene copolymer B) is the solution polymerization, which comprises polymerizing ethylene and 1-butene, and possibly additional comonomers, in a liquid reaction medium capable to maintain the nascent polymer in solution.

The term solution polymerization means that the polymer is fully soluble in the polymerization medium at the polymerization temperature used.

The temperature range useful for the solution polymerization is preferably from 60° C to 200° C, more preferably

from 80° C to 150° C, most preferably from 89° C to 140° C.

In selecting the optimal polymerization temperature, it is to be considered that by increasing the temperature, the polymer solubility is increased, but the catalyst decay rate is increased.

Hydrogen can be efficiently used to regulate the molecular weight of the obtained polymers. Preferably the concentration of hydrogen in the liquid phase with respect to the ethylene concentration (H2/C2 mol ppm) ranges from 1 ppm to 20000 ppm, more preferably from 2 ppm to 18000 ppm.

One or more reactors in series or in parallel can be used.

The catalyst can be added in the first reactor only, or in more than one reactor.

The amount of comonomer(s), in particular 1-butene, in the liquid phase, can be from 0.1% to 40% by weight, in particular from 15% to 36% by weight, with respect to the total weigh of liquid solution (monomers and liquid reaction medium) present in the concerned polymerization reactor.

The polymerization pressure is preferably from 20 to 45 barg.

Usually, the amount of polymer dissolved in the reaction medium ranges from 10 to 40% wt/vol preferably from 12 to 35% wt/vol. The amount of polymer dissolved in the liquid reaction medium is generally a compromise between the target of maximum productivity of the polymerization and the operability of the reactor, which becomes troublesome when the polymer concentration is too high.

In the latter case in fact, the viscosity of the solution does not permit an efficient stirring and the heat removal is problematic. Variations of the polymer solubility may also derive from production of polymer with different molecular weight (polymers with higher molecular weight are generally less soluble) and different chemical composition (by varying the 1-butene content also variation in polymer solubility may be observed).

For all these reasons it is important to have an inert reaction medium that ensures the polymer solubility over an as wide as possible range of operative conditions (polymer concentration, polymer molecular weight and polymer composition).

Hence the liquid reaction medium preferably comprises a liquid hydrocarbon having a boiling point at atmospheric pressure higher than 60°C and more preferably higher than 70°C, such as toluene, cyclohexane, isododecane etc.

It has been observed that for the preparation of the present ethylene copolymer component B), cyclohexane is the preferred reaction medium, because it allows a great flexibility of the process conditions while maintaining the nascent polymer in solution.

The present ethylene copolymer component B) can also contain additives commonly employed in the art, such as antioxidants, light stabilizers, heat stabilizers, colorants and fillers.

The polyolefin composition may be manufactured by mixing components A) and B) together, melting and extruding the mixture and pelletizing the resulting composition using known techniques and apparatus.

Useful melt-mixing apparatus in this context are in particular extruders or kneaders, and particular preference is given to twin-screw extruders. The melting temperature can be from 190° to 230°C. It is also possible to premix the components at room temperature in a mixing apparatus.

Preferably, the present polyolefin composition has at least one of the following features:

- Melt Flow Rate E from 0.05 to 20 g/10 min., more preferably from 0.3 to 15 g/10 min.;
- Tensile Modulus from 200 to 1500 MPa, more preferably from 300 to 1400 MPa most preferably from 300 to 1300 MPa;
- Elongation at break from 20% to 1500%, more preferably from 30% to 1300%;
- Impact Charpy notched at 23 °C from 4 to 150 $kJ/m^2$, more preferably from 6 to 130 $kJ/m^2$;
- Impact Charpy notched at 0 °C from 1 to 150 $kJ/m^2$, more preferably from 2 to 130 $kJ/m^2$;
- Impact Charpy notched at -20 °C from 1 to 130 $kJ/m^2$, more preferably from 2 to 120 $kJ/m^2$;
- Falling weight dart test ductile-brittle transition temperature 48 hours equal to lower than -20°C, the lower limit being preferably of -65°C.

The polyolefin composition may also contain conventional additives such as mineral fillers, colorants, antioxidants, light stabilizers and heat stabilizers. Mineral fillers that can be included in the composition include talc, $CaCO_3$, silica, wollastonite ($CaSiO_3$), clays, diatomaceaous earth, titanium oxide and zeolites. Typically the mineral filler is in particle form having an average diameter ranging from 0.1 to 10 micrometers.

The present disclosure also provides final articles, in particular:

- blown films and blow moulded containers (such as bottles, with and without handle, jerry cans, etc.), preferably when the recyclate polyolefin component A) is polyethylene-rich (in particular containing at least 80%, preferably 85%, more preferably 90%, most preferably 95% of polyethylene, the remaining portion being polypropylene), in particular with Melt Flow Rate E of the total polyolefin composition from 0.05 to 1.5 g/10min.;
- extruded items, in particular for THF applications, sheets;
- injection moulded items (such as containers, flower pots, battery, automotive components, etc), preferably with Melt

Flow Rate E of the total polyolefin composition > 5 g/10 min.;

- cast films, specially with Melt Flow Rate E of the total polyolefin composition from 2 to 10 g/10 min.;
- raffia, preferably when the recyclate polyolefin component A) is polyethylene-rich (in particular containing at least 80%, preferably 85%, more preferably 90%, most preferably 95% of polyethylene, the remaining portion being polypropylene), in particular with Melt Flow Rate E from 1 to 5 g/10 min., more preferably from 1.5 to 4 g/10 min., more preferably from 2 to 3 g/10 min.;
- pipes, in particular sewage pipes.

EXAMPLES

Various embodiments, compositions and methods as provided herein are disclosed below in the following examples. These examples are illustrative only, and are not intended to limit the scope of the invention.

The following analytical methods are used to characterize the polymer compositions.

## 1-butene content

$^{13}C$ NMR spectra were acquired on a Bruker AV-600 spectrometer equipped with cryoprobe, operating at 160.91 MHz in the Fourier transform mode at 120 °C.

The peak of the Sδδ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^{1}H$-$^{13}C$ coupling. 512 transients were stored in 32K data points using a spectral window of 9000 Hz.

The assignments of the spectra were made according to J.C. Randal, Macromol. Chem Phys., C29, 201 (1989).

The evaluation of triad distribution and the composition were made according to Kakugo ("Carbon-13 NMR determination of monomer sequence distribution in ethylene-propylene copolymers prepared with δ-titanium trichloride-diethyl-aluminum chloride" M. Kakugo, Y. Naito, K. Mizunuma and T. Miyatake, Macromolecules, 1982, 15, 1150) modified to consider overlaps of signals in the spectra, using the following equations:

$$BBB = 100\ T\beta\beta/S \qquad BBE = 100\ T\beta\delta/S \qquad EBE = 100\ 2B2\ (EBE)\ /S$$

$$BEB = 100\ S\beta\beta/S \qquad BEE = 100\ S\alpha\delta/S \qquad EEE = 100\ (0.25\ S\gamma\delta + 0.5\ S\delta\delta)/S$$

$$S = T\beta\beta + T\beta\delta + 2B2\ (EBE) + S\beta\beta + S\alpha\delta + 0.25\ S\gamma\delta + 0.5\ S\delta\delta$$

The molar percentage of 1-butene content was evaluated using the following equation:

$$B\%\ mol = [EBE+BBE+BBB]$$

$$E\%\ mol = 100 - B\%\ mol$$

The weight percentage of 1-butene content was evaluated using the following equation:

$$B\ (wt\%) = \frac{B\ (\%\ mol) * 100 * MW\ B}{[B\ (\%\ mol) * MW\ B] + [(100 - B\ (\%\ mol)) * MW\ E]}$$

where B (% mol) is the molar percentage of 1-butene content, while MW E and MW B are the molecular weights of ethylene and 1-butene, respectively.

## Density

Determined according to ISO 1183-1:2012 at 23°C, immersion method.

## Melt Flow Rate

Determined according to ISO 1133-1 2012-03 with the specified temperature and load.

## Intrinsic viscosity

The sample was dissolved in tetrahydronaphthalene at 135 °C and then was poured into the capillary viscometer. The viscometer tube (Ubbelohde type) was surrounded by a cylindrical glass jacket; this setup allows temperature control with a circulating thermostated liquid. The downward passage of the meniscus was timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine the intrinsic viscosity.

## Melting temperature Tm, melting enthalpy ΔHm, crystallization temperature Tc and glass transition temperature Tg

Determined by differential scanning calorimetry (DSC) according to ISO 11357-3:2018 for Tm, ΔHm and Tc, according to ISO 11357-2:2020 for Tg.

A sample weighting 13 ± 1 mg was heated to 200 ± 1 °C at a rate of 10 °C/min and kept at 200 ± 1 °C for 5 minutes in nitrogen stream and was thereafter cooled at a rate of 20° C/min to -90 ± 2 °C, thereby kept at this temperature for 5 min. Then, the sample was again melted at a temperature rise rate of 10 °C/min up to 200 °C ± 1. The melting scan was recorded, a thermogram was obtained, and, from this, temperatures corresponding to peaks were read. Except where otherwise explained, the temperature corresponding to the most intense melting peak recorded during the second fusion was taken as the melting temperature. The melting enthalpy $\Delta H_m$, was measured on said most intense melting peak. Obviously, if only one peak is detected, both melting temperature and $\Delta H_m$, are provided by (i.e. measured on) such peak. To determine melting enthalpy $\Delta H_m$, construct the base-line by connecting the two closest points at which the melting endotherm peak deviate from the baseline. The melting enthalpy ($\Delta H_m$) is then calculated by integrating the area between DSC heat flow recorded signal and constructed baseline.

The glass transition temperature Tg was calculated from the second melting run. When a polymer is heated to its glass transition temperature, the heat capacity of the material shows a step increase and the thermogram of heat flow vs temperature exhibits an inflection point. The temperature at which the inflection occurs is defined as the glass transition temperature.

The crystallization temperature Tc was calculated from the cooling run. While cooling, the polymer crystallizes exhibiting an exothermic peak. The crystallization temperature Tc corresponds to the peak of the exothermic event.

## Glass transition temperature Tg determination via DMTA (Dynamic Mechanical Thermal Analysis)

Molded specimen of 20 mm x 5 mm x 1 mm were fixed to the DMTA machine for tensile stress. The frequency of the sinusoidal oscillation was fixed at 1 Hz. The DMTA translate the elastic response of the specimen starting from -100°C (glassy state) to 130°C (softening point). In this way it is possible to plot the elastic response versus temperature. The elastic modulus in DMTA for a viscoelastic material is defined as the ratio between stress and strain also defined as complex modulus E*=E'+iE". The DMTA can split the two components E' and E" by their resonance and it is possible to plot E' (elastic component), E" (loss modulus) and E"/E' = tan δ (damping factor) vs temperature. The glass transition temperature Tg is assumed to be the temperature at the maximum of the curve tan = (δ) E"/E' vs temperature.

## Determination of the product of the reactivity ratios rlxr2

The product of reactivity ratios were obtained from $^{13}C$ NMR triad distribution according to C.J. Carman, R.A. Harrington and C.E. Wilkes, Macromolecules, 10, 536 (1977) using the following expression:

$$r_1 r_2 = 1 + \left[ \frac{E\ (\%\ mol)}{B\ (\%\ mol)} \left[ \frac{BBB + BBE}{EBE} + 1 \right] \right] - \left[ \frac{E\ (\%\ mol)}{B\ (\%\ mol)} + 1 \right] \left[ \frac{BBB + BBE}{EBE} + 1 \right]^{0.5}$$

wherein B indicates a 1-butene unit and E indicates an ethylene unit.

The same NMR apparatus and measurement conditions as for the comonomer content determination were used.

**Tensile modulus*:** ISO 527/1+2:2019.
**Tensile stress at yield and at break*:** ISO 527:2019.
**Elongation at break and at yield*:** ISO 527:2019.
**Stress @ 100% elongation and @ 300% elongation*:** ISO 527:2019.
Charpy impact test*: ISO 179/1eA:2023 (notched) or ISO 179/1eU:2023 (un-notched).

The Charpy values were measured at 23 °C, 0 °C and -20 °C.

Note * The test specimens were prepared via compression moulding under the following conditions.

Machine platens were set to 180 °C. An aluminum foil was put on a steel plate and a 150x150 mm template was located on it. 100 g of polymer pellets were used to fill the cavity of the template. Another aluminum foil and steel plate were used to complete the sandwich-structure. The sandwich was introduced in the compression moulding machine on the hot platen. The platens were closed, without applying any pressure, and the sample was heated for 5 min. Then, the pressure of 50 bar was applied on the sample for 5 min, maintaining the temperature of the heating platens to 180 +/- 1 °C. At the end of the heating treatment, the platens were cooled at 15 °C/min and the sandwich was extracted when the platens temperature was lower than 30 °C. The polymer plaque was so obtained, and suitable test specimens were machined from this one.

**Shore A:** ISO 868:2003.

**23 °C Tension set**

Tension set: specimens with dimensions 50x2x2 mm were tested at 23 +/- 1 °C. The specimens were elongated on a brass bow with elongation 200 % and kept in this position for 10 min. Then, the specimens were removed and kept at rest for additional 10 min. Finally, the length of the specimens was measured again.

Tension set was then calculated as: Tension set % = [(L- L0)/L0] * 100, where L0 = original length of the specimen and L = final length of the specimen after the described procedure.

**23 °C Compression set (@25%)**

Round specimens with 28.67 mm diameter and 12.7 mm thick are required. The specimens were squashed between two flanges, which had a diameter of 130 mm, a thickness of 14 mm and a hole interaxis of 100 mm.

The flanges were used to apply a 400 lbs force on the specimens, corresponding to a 28 mm spring squashing. Firstly, the specimens were squashed for a 25 % of their original thickness between the two flanges.

The so obtained apparatus was kept at 23 °C for 22 hours. At the end, the specimens were removed, kept at rest for 30 min and finally the thickness was measured again.

The compression set was calculated as: compression set (%) = [(t0-t1)/(t0-t2)]*100, where t0 = original thickness, t1 = final measured thickness and t2 = the thickness of the specimen after the 25 % compression (75 % of the original thickness).

**Molecular Weight Distribution Determination**

The determination of the means Mw, Mn and Mz and of Mw/Mn derived therefrom was carried out by high-temperature gel permeation chromatography using a method described in ISO 16014-1, -2, -4, issue of 2003. The specifics according to the mentioned ISO standards are as follows: Solvent 1,2,4-trichlorobenzene (TCB), temperature of apparatus and solutions 145°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500μl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: krs= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

## Xylene soluble fraction

2.5 g of polymer and 250 $cm^3$ of o-xylene were introduced in a glass flask equipped with a refrigerator and a magnetical stirrer. The temperature was raised in 30 minutes from room temperature up to the boiling point of the solvent (135°C). The so obtained clear solution was then kept under reflux and stirring for further 30 minutes. The closed flask was then kept in a thermostatic water bath at 25 °C for 30 minutes as well so that the crystallization of the insoluble (XI) part of the sample could take place. The so formed solid was filtered on quick filtering paper. 100 $cm^3$ of the filtered liquid was poured in a previously weighed aluminum container which was heated on a heating plate under nitrogen flow, to remove the solvent by evaporation. The container was then kept in an oven at 80 °C under vacuum to dryness and then weighed after constant weight is obtained.

Thus one calculates the percent by weight of polymer soluble and insoluble in xylene at 25 °C.

## Falling weight dart test ductile-brittle transition temperature 48h

Measured according to ISO 6603-2:2023.

## Examples 1-12 and Comparison Examples 1-3

The following materials were used in the examples.

### Recyclate polyolefin component A)

Component A1): a recyclate polyolefin containing not less than 98% by weight, referred to the total weight of A1), of a blend between 50% by weigh of waste polyethylene and 50% by weight of waste polypropylene, referred to the total weight of polyethylene and polypropylene.

Its properties are reported in Table 3, Comparative Example 1, wherein said component is used alone.

Component A2): a recyclate polyolefin containing not less than not less than 98% by weight, referred to the total weight of A2), of a blend between 30% by weigh of waste polyethylene and 70% by weight of waste polypropylene, referred to the total weight of polyethylene and polypropylene.

Its properties are reported in Table 4, Comparative Example 2, wherein said component is used alone.

Component A3): a recyclate polyolefin containing not less than 98% by weight, referred to the total weight of A3), of a blend between 70% by weigh of waste polyethylene and 30% by weight of waste polypropylene, referred to the total weight of polyethylene and polypropylene.

Its properties are reported in Table 5, Comparative Example 3, wherein said component is used alone.

### Ethylene copolymer component B)

Prepared by polymerization with a metallocene catalyst, as reported herein after.

Preparation of the metallocene catalyst (A-1)

Dimethylsilyl {(2,4,7-trimethyl-1-indenyl)-7-(2,5-dimethyl-cyclopenta[1,2-b:4,3-b']-dithiophene)} zirconium dichloride (A-1) was prepared according to Example 32 of WO0147939.

Preparation of the catalytic solution

Under nitrogen atmosphere, 8.1 L of a solution of 4.5 %wt/v of TIBA in cyclohexane (1.84 mol of TIBA) and 760 mL of a solution 30 %wt/wt of MAO in toluene (3.65 moles ofMAO) were loaded in a 20 L jacketed glass reactor equipped with an anchor stirrer and allowed to react at room temperature for about 1 hour under stirring.
After this time, the metallocene A-1 (1.6 g, 2.75 mmol) was added and dissolved under stirring for about 30 minutes.
The final solution was discharged from the reactor into a cylinder through a filter to remove solid residues (if any).
The composition of the solution is as follows:

| Al g/L | Zr %w | Al/Zr mol ratio | Metallocene Conc. mg/L |
|---|---|---|---|
| 16.7 | 0.028 | 1996 | 181 |

Preparation of the ethylene copolymer component B)

The polymerization was carried out continuously in a pilot plant comprising a cascade of two stirred reactors in which cyclohexane constituted the liquid medium.
The first reactor was equipped with a device to transfer the polymer solution into the second one.
The catalyst is fed into both reactors.
The polymerization conditions are reported in Table 1.
The polymer properties are reported in Table 2.

Table 1

| | | First Reactor | Second Reactor |
|---|---|---|---|
| Temperature | °C | 100 | 100 |
| Pressure | barg | 33.5 | 33 |
| H2/C2 | ppm mol | 5224 | 5172 |
| Cyclohexane | wt.% | 65 | 70 |
| Monomers | wt.% | 15 | 17 |
| Polymer | wt.% | 21 | 21 |
| C2 in liquid phase | % mol | 5.7 | 8.0 |
| C4 in liquid phase | % mol | 22.1 | 21.0 |
| Mileage final | Kg/gMe | - | 1500 |
| Notes: Ex. = Example; Me = metallocene catalyst (A-1); H2 = hydrogen; C2 = ethylene; C4 = 1-butene. | | | |

Table 2 - ethylene copolymer component B)

| | | |
|---|---|---|
| Melt Flow Rate 190 °C/2.16 kg (E) | g/10min | 1.2 |
| Melt Flow Rate 230 °C/2.16 kg (L) | g/10min | 2.3 |
| Melt Flow Rate 190 °C/21.6 kg (F) | g/10min | 27.1 |
| Melt Flow Rate 190 °C/10 kg (N) | g/10min | 9.6 |
| Density | $g/cm^3$ | 0.862 |
| Intrinsic viscosity | dl/g | 1.47 |
| Xylene soluble 25 °C | wt. % | 99.9 |
| Tm melting temperature | °C | 10.2 |
| ΔHm melting enthalpy | J/gr | 31.3 |
| $^{13}C$ NMR Total 1-butene ($C4_{cont}$) | wt. % | 34.3 |
| $C4_{cont}$ /ΔHm | | 1.1 |

(continued)

| | | |
|---|---|---|
| DSC Glass transition temperature | °C | -56.6 |
| DMTA Glass transition temperature | °C | -48 |
| $^{13}$C NMR E | mol% | 79.29 |
| $^{13}$C NMR B | mol% | 20.71 |
| $^{13}$C NMR BBB | % | 1.17 |
| $^{13}$C NMR BBE | % | 5.73 |
| $^{13}$C NMR EBE | % | 13.80 |
| $^{13}$C NMR r1r2 | | 0.83 |
| $^{13}$C NMR BEB | % | 3.49 |
| $^{13}$C NMR BEE | % | 26.32 |
| $^{13}$C NMR EEE | % | 49.48 |
| Tensile Stress @ yield | MPa | 0 |
| Elongation @ yield | % | 0 |
| Tensile Stress @ break | MPa | 2 |
| Elongation @ break | % | 1220 |
| Stress @ 100% elongation | MPa | 1.0 |
| Stress @ 300% elongation | MPa | 1.3 |
| Shore A | NR | 45 |
| 23 °C Tension set (@100%) | % | 10 |
| 23 °C Compression set (@25%) | % | 40 |
| Notes: $^{13}$C NMR E = molar amount of ethylene, $^{13}$C NMR B = molar amount of buene-1; $^{13}$C NMR E , $^{13}$C NMR B, $^{13}$C NMR BBB, $^{13}$C NMR BBE, $^{13}$C NMR EBE, $^{13}$C NMR BEB, $^{13}$C NMR BEE $^{13}$C NMR EEE and $^{13}$C NMR rlr2 values in the tables are rounded. | | |

The said components A) and B) were mixed together by extrusion.

The extrusion was carried using a twin screw extruder, model Werner&Pfleiderer ZSK40SC.

This line had a screw with a diameter (D) of 40 mm and a process length of approximately 48 LID that was provided with gravimetric feeders.

A strand die plate with cooling bath and strand cutter (Scheer SGS 100) was used to form pellets; vacuum degassing (barrel No. 9) was also applied to extract fumes and decomposition products.

Running conditions:

- Screw speed: 300 rpm;
- Capacity: 40-50 kg/h;
- Barrel Temperature: 200-240 °C.

The amounts of components A) and B), referred to the total weight of A) and B), and the properties of the resulting compositions are reported in Tables 3 to 5, Examples 1 to 12.

Table 3

| | | Comp. Ex. 1 | Ex. 1 | Ex. 2 | Ex. 3 | Ex. 4 |
|---|---|---|---|---|---|---|
| **Component A1)** | wt.% | 100 | 98 | 95 | 90 | 80 |
| **Component B)** | wt.% | 0 | 2 | 5 | 10 | 20 |

(continued)

| | | Comp. Ex. 1 | Ex. 1 | Ex. 2 | Ex. 3 | Ex. 4 |
|---|---|---|---|---|---|---|
| Melt Flow Rate 190 °C/2.16 kg (E) | g/10 min | 4.03 | 4.11 | 3.92 | 3.72 | 3.54 |
| Tensile Modulus | MPa | 1050 | 1030 | 940 | 790 | 580 |
| Elongation @ break | % | 31 | 90.7 | 210 | 600 | 775 |
| Impact Charpy notched 23 °C | $kJ/m^2$ | 6.3 | 7.4 | 33.2 | 61.1 | 83.7 |
| Impact Charpy notched 0 °C | $kJ/m^2$ | 3.5 | 3.7 | 5.9 | 34.3 | 78.7 |
| Impact Charpy notched -20 °C | $kJ/m^2$ | 2.7 | 2.7 | 3.6 | 5 | 50.8 |
| Falling weight dart test ductile-brittle transition temperature 48h | °C | -23.3 | -32.5 | < -50.0 | < -50.0 | < -50.0 |
| Notes: Ex. = Example; Comp. Ex. = Comparative Example | | | | | | |

Table 4

| | | Comp. Ex. 2 | Ex. 5 | Ex. 6 | Ex. 7 | Ex. 8 |
|---|---|---|---|---|---|---|
| **Component A2)** | wt.% | 100 | 98 | 95 | 90 | 80 |
| **Component B)** | wt.% | 0 | 2 | 5 | 10 | 20 |
| Melt Flow Rate 190 °C/2.16 kg (E) | g/10 min | 7.39 | 7.17 | 7.05 | 6.11 | 5.91 |
| Tensile Modulus | MPa | 1030 | 1090 | 1020 | 790 | 670 |
| Elongation @ break | % | 27.2 | 50 | 170 | 500 | 600 |
| Impact Charpy notched 23 °C | $kJ/m^2$ | 7.3 | 8.7 | 12.8 | 49.3 | 75.6 |
| Impact Charpy notched 0 °C | $kJ/m^2$ | 4.5 | 5.1 | 6.6 | 8.8 | 55.7 |
| Impact Charpy notched -20 °C | $kJ/m^2$ | 2.7 | 3.4 | 4 | 5.1 | 7.3 |
| Falling weight dart test ductile-brittle transition temperature 48h | °C | -14.2 | -27.1 | -38.5 | < -50 | < -50 |

Table 5

| | | Comp. Ex. 3 | Ex. 9 | Ex. 10 | Ex. 11 | Ex. 12 |
|---|---|---|---|---|---|---|
| **Component A3)** | wt.% | 100 | 98 | 95 | 90 | 80 |
| **Component B)** | wt.% | 0 | 2 | 5 | 10 | 20 |
| Melt Flow Rate 190 °C/2.16 kg (E) | g/10 min | 1.79 | 1.67 | 1.47 | 1.64 | 1.59 |
| Tensile Modulus | MPa | 960 | 920 | 830 | 740 | 530 |
| Elongation @ break | % | 140 | 160 | 310 | 525 | 695 |
| Impact Charpy notched 23 °C | $kJ/m^2$ | 17.2 | 34 | 58.6 | 78.2 | 96.5 |
| Impact Charpy notched 0 °C | $kJ/m^2$ | 4 | 13.7 | 31 | 63.3 | 97.3 |
| Impact Charpy notched -20 °C | $kJ/m^2$ | 3.4 | 4 | 5 | 7.1 | 92.6 |
| Falling weight dart test ductile-brittle transition temperature 48h | °C | -41 | < -50.0 | < -50.0 | < -50.0 | < -50.0 |

## Claims

**1.** A polyolefin composition comprising:

A) from 99.5% to 60% by weight, preferably from 99% to 65% by weight, more preferably from 99% to 70% by weight, of a recyclate polyolefin component containing not less than 80% by weight, preferably not less than 90% by weight, more preferably not less than 95% by weight, with respect to the weight of A), of a waste material selected from polyethylene, polypropylene or their mixtures;
B) from 0.5% to 40% by weight, preferably from 1% to 35% by weight, more preferably from 1% to 30% by weight, of an ethylene copolymer having the following features:

1) a 1-butene content $C4_{cont}$, measured with $^{13}C$ NMR, from 15% to 45% by weight, preferably from 20% to 40% by weight, with respect to the weight of the ethylene copolymer;
2) density from 0.840 to 0.910 g/cm$^3$, preferably from 0.850 to 0.890 g/cm$^3$, more preferably from 0850 to 0.880 g/cm$^3$, determined according to ISO 1183-1:2012 at 23°C;
3) Melt Flow Rate E from 0.1 to 15 g/10 min., preferably from 0.3 to 12 g/10 min., measured according to ISO 1133-1 2012-03 at 190 °C, with a load of 2.16 kg;
4) product r1·r2 of the reactivity ratios obtained from $^{13}C$ NMR triad distribution, from 0.55 to 0.95 or from 0.55 to 0.92, preferably from 0.6 to 0.95 or from 0.6 to 0.92, more preferably from 0.55 to 0.89 or from 0.6 to 0.92, where r1 is the reactivity ratio of ethylene to 1-butene and r2 is the reactivity ratio of 1-butene to ethylene;

wherein the amounts of A) and B) are referred to the total weight of A) + B).

**2.** The polyolefin composition of claim 1, having a Tensile Modulus from 200 to 1500 MPa, preferably from 300 to 1400 MPa more preferably from 300 to 1300 MPa, measured according to ISO 527/1+2:2019, on compression moulded specimens.

**3.** The polyolefin composition of claim 1 or 2, wherein the recyclate polyolefin component A) comprises from 5% by weight to 95% by weight of waste polyethylene and from 95% by weight to 5% by weight of waste polypropylene, preferably from 20% by weight to 80% by weight of waste polyethylene and from 80% by weight to 20% by weight of waste polypropylene, more preferably from 25% by weight to 75% by weight of waste polyethylene and from 75% by weight to 25% by weight of waste polypropylene, referred to the total weight of waste polyethylene and waste polypropylene.

**4.** The polyolefin composition of claim 1 or 2, having at least one of the following features:

- Melt Flow Rate E from 0.05 to 20 g/10 min., preferably from 0.3 to 15 g/10 min.;
- Elongation at break from 20% to 1500%, preferably from 30% to 1300%;
- Impact Charpy notched at 23 °C from 4 to 150 kJ/m$^2$, preferably from 6 to 130 kJ/m$^2$;
- Impact Charpy notched at 0 °C from 1 to 150 kJ/m$^2$, preferably from 2 to 130 kJ/m$^2$;
- Impact Charpy notched at -20 °C from 1 to 130 kJ/m$^2$, preferably from 2 to 120 kJ/m$^2$;
- Falling weight dart test ductile-brittle transition temperature 48 hours equal to lower than
- 20°C, the lower limit being preferably of -65°C.

**5.** The polyolefin composition of claim 1 or 2, wherein the recyclate polyolefin component A) has an elongation at break, measured according to ISO 527:2019 on compression moulded specimens, equal to or lower than 600%, more preferably equal to or lower than 400%, most preferably equal to or lower than 250%, the lower limit being preferably of 5%, more preferably of 15% in all cases, and/or a Melt Flow Rate E from 0.1 to 40 g/10 min., preferably from 0.3 to 25 g/10 min.

**6.** The polyolefin composition of claim 1 or 2, wherein the recyclate polyolefin component A) has at least one of the following properties:

- density from 0.91 to 0.93 g/cm$^3$ ;
- a first peak melting temperature Tm(1) ranging from 105° to 115°C and a second peak melting temperature Tm(2) ranging from 118° to 128°C;
- tensile modulus from 500 to 1300 MPa, preferably from 600 to 1200 MPa;
- elongation at break from 10% to 200%, preferably from 15% to 180%;
- Impact Charpy notched at 23 °C from 3 to 30 kJ/m$^2$, preferably from 4 to 25 kJ/m$^2$;
- an ash content (ISO 3451-1 at 800°C) equal to or lower than 4.0% by weight, preferably ranging from 0.2 to 1.0% by weight, based on the weight of the recyclate polyolefin component A).

**7.** The polyolefin composition of claim 1 or 2, wherein the ethylene copolymer component B) has an elongation at break, measured according to ISO 527:2019 on compression moulded specimens, equal to or greater than 920%, preferably equal to or greater than 950%, the upper limit being preferably of 1800%, more preferably of 1600% in all cases.

**8.** The polyolefin composition of claim 1 or 2, wherein the ethylene copolymer component B) has a melting enthalpy ΔHm equal to or lower than 60 J/g, preferably equal to or lower than 55 J/g, in particular from 5 to 60 J/g, or from 10 to 55 J/g, measured by Differential Scanning Calorimetry with a heating rate of 10°C per minute.

**9.** The polyolefin composition of claim 1 or 2, wherein the ethylene copolymer component B) has a melting temperature Tm from 1 °C to 55 °C, preferably from 8 °C to 50 °C, measured by Differential Scanning Calorimetry with a heating rate of 10°C per minute.

**10.** The polyolefin composition of claim 1 or 2, wherein the ethylene copolymer component B) has at least one of the following properties:

- a ratio $C4_{cont}$ / ΔHm from 0.1 to 2.5, preferably from 0.2 to 2.0;
- crystallization temperature Tc equal to or higher than 8 °C, preferably equal to or higher than 10 °C, measured by Differential Scanning Calorimetry with a heating rate of 10°C per minute, the preferred upper limit being of 55°C, more preferably of 50 °C;
- glass transition temperature (Tg), measured by Differential Scanning Calorimetry with a heating rate of 10°C per minute, from -35 to -60°C;
- Shore A from 20 to 75, measured according to ISO 868:2003;
- amount of BBB triads, measured with $^{13}C$ NMR, of at least 0.1% preferably of at least 0.3%, the preferred upper limit being in all cases of 2.5%, in particular of 2%.

**11.** Formed articles comprising the polyolefin composition of claim 1.

**12.** Formed articles according to claim 11, in form of blown or cast films, or blow moulded containers, or extruded items, or injection moulded items, or raffia, or pipes.

Europäisches Patentamt
European Patent Office
Office européen des brevets

# EUROPEAN SEARCH REPORT

Application Number
EP 25 15 0279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 101484 A (MITSUI CHEMICALS INC) 5 June 2014 (2014-06-05) * tables 1,2 * ----- | 1-12 | INV. C08L23/10 |
| Y | US 2022/177679 A1 (KAHLEN SUSANNE [AT] ET AL) 9 June 2022 (2022-06-09) * table 3 * ----- | 1-12 | |
| Y | US 5 621 046 A (IWANAMI KUNIO [JP] ET AL) 15 April 1997 (1997-04-15) * examples 2,4,10,12,14 * ----- | 1-12 | |

TECHNICAL FIELDS SEARCHED (IPC)

C08L

The present search report has been drawn up for all claims

| Place of search | Date of completion of the search | Examiner |
|---|---|---|
| Munich | 19 May 2025 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 25 15 0279

This annex lists the patent family members relating to the patent documents cited in the above-mentioned European search report. The members are as contained in the European Patent Office EDP file on The European Patent Office is in no way liable for these particulars which are merely given for the purpose of information.

19-05-2025

| Patent document cited in search report | Publication date | Patent family member(s) | Publication date |
|---|---|---|---|
| JP 2014101484 A | 05-06-2014 | NONE | |
| US 2022177679 A1 | 09-06-2022 | BR 112021019230 A2 | 30-11-2021 |
| | | CA 3135081 A1 | 08-10-2020 |
| | | EP 3947555 A1 | 09-02-2022 |
| | | US 2022177679 A1 | 09-06-2022 |
| | | WO 2020201084 A1 | 08-10-2020 |
| US 5621046 A | 15-04-1997 | AU 689895 B2 | 09-04-1998 |
| | | CA 2153625 A1 | 12-01-1996 |
| | | EP 0696616 A2 | 14-02-1996 |
| | | KR 960004432 A | 23-02-1996 |
| | | US 5621046 A | 15-04-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5030662 A
- WO 2020089196 A1
- WO 2022023469 A1
- WO 0147939 A


### Non-patent literature cited in the description


- **C. J. CARMAN** ; **R. A. HARRINGTON** ; **C. E. WILKES**. Monomer Sequence Distribution in Ethylene-Propylene Rubber Measured by C NMR. 3. Use of Reaction Probability Mode. *Macromolecules*, 1977, vol. 10, 536
- **J.C. RANDAL**. *Macromol. Chem Phys.*, 1989, vol. C29, 201
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethyl-aluminum chloride. *Macromolecules*, 1982, vol. 15, 1150
- **HUGGINS, M.L.** *J. Am. Chem. Soc.*, 1942, vol. 64, 2716
- **C.J. CARMAN** ; **R.A. HARRINGTON** ; **C.E. WILKES**. *Macromolecules*, 1977, vol. 10, 536
- **BENOIT H.** ; **REMPP P.** ; **GRUBISIC Z.** *J. Polymer Sci., Phys.*, 1967, vol. 753